# EUROPÄISCHE PATENTSCHRIFT

(11) **EP 2 971 332 B1**
(45) Veröffentlichungstag und Bekanntmachung des Hinweises auf die Patenterteilung: **07.12.2016**
(21) Anmeldenummer: 14731133.6
(22) Anmeldetag: 13.03.2014
(51) Int. Cl.: D21C 5/02, D21C 9/00, D21C 9/18, D21B 1/32, D21B 1/34

(54) **VERFLÜSSIGER MIT EINEM FÖRDERROHR**
LIQUEFIER COMPRISING A TRANSPORTING TUBE
LIQUÉFACTEUR POURVU D'UN TUBE DE TRANSPORT

(30) Priorität: 15.03.2013 DE 102013004416
(43) Veröffentlichungstag der Anmeldung: 20.01.2016
(73) Patentinhaber: Boltersdorf, Hans-Joachim, 56656 Brohl-Lützing (DE)
(72) Erfinder: Boltersdorf, Hans-Joachim, 56656 Brohl-Lützing (DE)
(74) Vertreter: Castell, Klaus
(86) Internationale Anmeldenummer: PCT/DE2014/000118
(87) Internationale Veröffentlichungsnummer: WO 2014/139502

(56) Entgegenhaltungen:
- EP-A1- 0 279 022
- EP-A1- 1 584 743

## Beschreibung

Die Erfindung betrifft einen Verflüssiger mit einem Förderrohr, das einen Eingang und einen Ausgang aufweist und in dem ein Dickstoffförderer angeordnet ist.

Ein derartiger Verflüssiger ist aus der EP 1 584 743 A1 bekannt.

Derartige Förderrohre dienen der Förderung von flüssigen und pastösen Medien wie beispielsweise auch von Pulpe aus einem Pulper.

Bei der Förderung von Pulpe kann es passieren, dass die Förderung einen besonders hohen Energieaufwand verursacht, weil die Konsistenz des geförderten Mediums der Förderung einen hohen Widerstand entgegenbringt. Darauf kann nur mit stärkeren Motoren, einer Variation des Dickstoffförderers, wie beispielsweise der Wendel- oder der Schneckenform oder einer Veränderung des geförderten Mediums reagiert werden.

Der Erfindung liegt die Aufgabe zu Grunde, das zu fördernde Medium mit einem minimalen Energieaufwand über größere Strecken zu fördern.

Hierfür wird ein gattungsgemäßer Verflüssiger vorgestellt, der sich dadurch auszeichnet, dass am Ausgang des Förderrohres eine Kreiselpumpe angeordnet ist.

Als Pumpe eignet sich besonders eine Kreiselpumpe mit einem radialen oder tangentialen Ausgang für das geförderte Medium. Eine derartige Pumpe führt dazu, dass ein im zylinderförmigen Förderrohr verflüssigtes Medium anschließend in einem pumpfähigen Zustand über eine Pumpe in ein Rohr gefördert wird, durch das das Medium in Folge der Pumpleistung weiter gefördert wird.

Die Kreiselpumpe kann als homogenisierende, d.h. desagglomerierende Pumpe oder als Mischpumpe eingesetzt werden. Derartige offene Pumpen haben nicht nur die Eigenschaft, auch inhomogene und großstückige Materialien verarbeiten zu können. Sie zertrümmern auch größere Holzteile, die dann in einem Zyklon leicht separiert werden können. Dabei ist es vorteilhaft, wenn die Kreiselpumpe mit einer derart hohen Drehzahl betrieben wird, dass sie eine ausreichend hohe Schlagkraft entwickelt, um auch Holzteile mit mehr als 5 cm Länge zu zertrümmern.

Obwohl die Wasserzufuhr das geförderte Volumen erhöht, wird vorgeschlagen, dass am Ausgang des vorzugsweise zylinderförmigen Förderrohrs und vor der Kreiselpumpe ein Hauptflüssigkeitszulauf angeordnet ist.

Der Hauptflüssigkeitszulauf kann eine Richtungskomponente in Richtung der Achse des Förderrohres haben. Das führt dazu, dass die zugeführte Flüssigkeit das Material im Förderrohr in Achsrichtung des Förderrohres beschleunigt.

Kumulativ oder alternativ kann der Hauptflüssigkeitszulauf eine Richtungskomponente in Richtung einer Umfangslinie des Förderrohres haben. Dazu kann der Zulauf tangential angeflanscht sein. Das geförderte Medium bekommt dadurch einen Drall, der besonders vorteilhaft ist, wenn das Medium mit einer Kreiselpumpe weitergefördert wird.

Am Ausgang des Förderrohres kann ein Trichter angeordnet sein, der den Förderquerschnitt verengt. Dieser Trichter führt zu einem Widerstand aber auch zu einer Erhöhung der Fördergeschwindigkeit des verflüssigten Mediums und erleichtert das Einleiten in einen nachgeschalteten Förderer. Im Bereich des Trichters ist mindestens ein Flüssigkeitszulauf angeordnet. Dadurch kann im Bereich des Trichters eine Verflüssigung erfolgen und die Zudosierung von Verflüssigungswasser im Konus sorgt dafür, dass im Förderrohr und im Bereich des Dickstoffförderers eine hohe Stoffdichte erhalten bleiben kann. Dadurch wird eine hohe Förderleistung bei gegebener Drehzahl erreicht.

Eine weitere Zudosierung von Verflüssigungswasser kann im Bereich des Eingangs wie beispielsweise an einem Zuführschacht für das geförderte Medium erfolgen. Der Schacht wirkt somit als Schwerkraftpuffer, während über eine Regelung dafür gesorgt wird, dass das Verhältnis von Schütthöhe, die beispielweise über eine Radarmessung ermittelt wird, zu hydraulischer Höhe, die beispielsweise durch einen Druckgeber ermittelt wird, in einem vorgegebenen Bereich gehalten wird. Wenn dieser Bereich eingehalten wird, bleiben die Werte der Stoffdichte und bei gegebener Drehzahl an der Wendel oder der Schnecke des Dickstoffförderers die Antriebsleistung der Welle in einem engen Bereich.

Der Flüssigkeitszulauf kann so ausgebildet sein, dass er der Flüssigkeit einen Drall gibt, sodass das geförderte Medium als Wirbelströmung in einen nachgeschalteten Förderer eintritt.

Der Erfindung liegt die Erkenntnis zu Grunde, dass ein üblicher Förderer mit Förderrohr und drehbarer Wendel als Verflüssiger verwendet werden kann, wenn am Trichter Wasserzuläufe angeordnet werden. Nach einem Aspekt der Erfindung wird somit nicht zuerst das zu fördernde Medium auf eine optimale Förderkonsistenz verdünnt, sondern das Förderrohr selber und insbesondere der Trichter werden als Verflüssiger ausgebildet. Dies ermöglicht es, während der Zugabe von Wasser das geförderte Medium zu fördern und gleichzeitig mit dem Wasser zu vermischen.

Die Zugabe von Wasser im Bereich des Förderrohres sorgt dafür, dass der Dickstoffförderer in seinem radial äußeren Bereichen zwischen Wendel und Förderrohr durch das zugegebene Wasser geschmiert wird und dadurch gerade in diesem Bereich eine hohe Verdünnung und somit ein niedriger Widerstand entsteht. Daher wird vorgeschlagen, dass am Förderrohr Nebenflüssigkeitszuläufe angeordnet sind, die ebenfalls auch tangential am Förderrohr angeflanscht sein können.

Erfreulicherweise hat sich herausgestellt, dass die Wasserzugabe am Trichter und gegebenenfalls auch am Förderrohr zu einer starken Reduktion der benötigten Förderenergie geführt hat. Auch ein Verklemmen von größeren Partikeln zwischen Förderrohr und drehbarer Wendel wird durch den mit der Wasserzugabe hervorgerufenen Spüleffekt vermieden.

Der Dickstoffförderer kann eine Wendel oder ein Schieber sein. Besonders vorteilhaft ist eine Schnecke.

Um auch noch im Bereich des Trichters das Medium aktiv weiter zu fördern, wird vorgeschlagen, dass im Bereich des Trichters ein Ende des Dickstoffförderers angeordnet ist, dessen Außendurchmesser sich dem Trichter entsprechend verjüngt.

Im Hinblick auf den Durchmesser des zylinderförmigen Förderrohrs und insbesondere des Trichters wird vorgeschlagen, dass die Gangweite des Dickstoffförderers im Förderrohr vom Eingang zum Ausgang zunimmt. Dies erlaubt es, die Förderrohrwendel an die geometrischen Abmessungen des Förderrohrs und die strömungstechnischen Anforderungen in Folge der Volumenerhöhung anzupassen.

Als vorteilhafte Ausführungsform eines nachgeschalteten Förderers wird vorgeschlagen, dass die Kreiselpumpe direkt am verjüngten Ende des Trichters angeordnet ist.

Eine konstruktiv einfache Bauweise ergibt sich, wenn der Dickstoffförderer, der Trichter und die Pumpe auf einer geraden Linie angeordnet sind. Hierdurch entsteht ein kompakter Verflüssiger, der bei Verwendung einer Kreiselpumpe eine Weiterförderung quer zur Linie ermöglicht.

Vorteilhaft ist es, wenn der Verflüssiger am Eingang des Förderrohres einen senkrecht zum Dickstoffförderer angeordneten Zulauf aufweist. Dadurch strömt das Medium den Dickstoffförderer von der Seite an und dadurch wird das Anbringen eines Antriebs beispielsweise an einer Schnecke erleichtert.

Gerade bei stückigen, schwer förderbaren Medien kann am Eingang des Verflüssigers, an dem noch keine ausreichende Verflüssigung vorliegt, eine Blockade oder eine hohe Reibung zwischen Dickstoffförderer und zylinderförmigem Förderrohr entstehen. Daher wird vorgeschlagen, dass das Förderrohr am Übergang vom Zulauf zum Förderrohr eine Aufweitung aufweist. Dies sorgt dafür, dass das Medium leicht in das Förderrohr eingezogen werden kann.

Um den Zulauf zum Dickstoffförderer strömungstechnisch zu beeinflussen, wird vorgeschlagen, dass der Zulauf am Übergang zum Förderrohr eine Einschnürung aufweist. Diese Einschnürung liegt vorzugsweise auf der Seite der Aufweitung und kann beispielsweise oberhalb der Aufweitung angeordnet sein. Auch diese Einschnürung führt zu einer schiefen Fläche, die das Medium in den Bereich des Anfangs des Dickstoffförderers drängt, um Verstopfungen am Übergang zwischen Zulauf und zylinderförmigem Förderrohr zu vermeiden.

Für eine optimale Regelung der Betriebszustände des Verflüssigers wird vorgeschlagen, dass im Zulauf eine Schütthöhenmesseinrichtung angeordnet ist. Dies kann über eine Radarmessung, eine Ultraschallmessung oder eine optische Erfassung erfolgen.

Außerdem ist es vorteilhaft, wenn im Zulauf oder im Förderrohr eine Messeinrichtung zur Ermittlung des hydrostatischen Drucks angeordnet ist. Dies kann eine im unteren Bereich des Verflüssigers angeordnete Druckmessdose sein.

Eine einfache Trennung von unterschiedlichen geförderten Materialien wird dadurch erreicht, dass am Ausgang des Förderrohres eine Pumpe und daran ein Zyklon angeordnet sind. Je nach verwendetem Lösungsmittel, wie etwa Wasser, Alkohol oder Salzwasser kann dann die Dichte des Lösungsmittels zu einem unterschiedlichen Trennungseffekt führen.

Energetisch vorteilhaft ist eine Leitung vom Flüssigkeitsauslass des Hydrozyklons direkt vor den Eingang der Kreiselpumpe. Dadurch kann der vom Zyklon zurückkommende Kreislaufvolumenstrom direkt vor dem Eingang der Kreiselpumpe zugegeben werden. Dann geht die Strömungslinie des von Zyklon zurückkommenden Kreislaufvolumenstroms einigermaßen ununterbrochen direkt vor den Eingang der Pumpe, wodurch die Antriebsleistung reduziert werden kann.

Bei einem Verfahren zum Betreiben eines derartigen Verflüssigers wird das zu behandelnde Material in einem Feststoffspeicher bei einer Gesamtstoffdichte von mehr als 15 % GG Gesamtstoffdichte vorbehandelt, anschließend wird im Verflüssiger die Gesamtstoffdichte auf unter 10 % GG reduziert und das verflüssigte Material wird mit der Kreiselpumpe weiter gefördert.

Während bei üblichen Feststoffpuffern wie klassischen Pulpern die Dichte bei etwa 20 % GG liegt, wird durch den Verflüssiger das Volumen des Feststoffspeichers, eines Pulpers oder eines Aufbereiters auf etwa 1/3 reduziert. Als möglichen Aufbereiter, der zusammen mit dem Verflüssiger einsetzbar ist, wird auf die PCT/DE2013/000129 verwiesen.

Besonders vorteilhaft ist es, wenn das verflüssigte Material von der Kreiselpumpe in einen Zyklon, vorzugsweise in einen Hydrozyklon, gefördert wird und dort fraktioniert wird. Dadurch wird ein Fraktionator für nahezu alle üblichen Abfallsorten bereitgestellt.

Je nach im Hydrozyklon verwendeter Flüssigkeit können unterschiedliche Materialien getrennt werden. Setzt man im Hydrozyklon für Materialien, die schwerer als Wasser sind, mit Salz versetztes Wasser ein, lassen sich derartige Materialien trennen. Materialien, die leichter als Wasser sind, können z.B. mit Alkohol getrennt werden. Zusätzlich kann eine Strömungstrennung eingesetzt werden.

Im Rahmen eines Batchverfahrens als auch in einem kontinuierlichen Verfahren kann eine Fraktion aus dem Zyklon zurück in den Feststoffspeicher gefördert werden.

Bei mehrfachem Kreislauf und Chargenbetrieb kann auch bei einem niedrigen Anreicherungswirkungsgrad im Oberlauf ein hoher Gesamtanreicherungsgrad erreicht werden. Selbst wenn im Zyklon nur 1 % einer bestimmten Fraktion entnommen wird, steigt der Anreicherungswirkungsgrad nach mehreren Durchläufen auf einen vorbestimmten Wert.

Die Anreicherung kann durch den Zyklon und/oder einen Aufbereiter erreicht werden. Daher ist es vorteilhaft, wenn der Feststoffspeicher ein Aufbereiter mit einem Rührwerk und einem Sieb ist, in dem eine Fraktion, wie insbesondere Faserstoff, vom Material durch das Sieb abgetrennt wird. Eine Kombination von einem Aufbereiter mit einem Hydrozyklon ermöglicht es beispielsweise aus Abfällen aus der Papierindustrie im Aufbereiter durch das Sieb Faserstoff abzutrennen und im Hydrozyklon Kunststoffe abzuscheiden.

Je nach zu bearbeitendem Material kann sich am Tauchrohr des Zyklons eine Verstopfung bilden, die auf sich dort sammelndes grobstückiges Material zurückzuführen ist. Auch ein Entfernen des Tauchrohres führt nicht zu einer Vermeidung von Verstopfungen, da sich dann die Verstopfungen in einem nachgeschalteten Leitungsabschnitt bilden. Eine Zerkleinerung des Materials vor der Separierung einer bestimmten Materialfraktion wäre aufwändig und uneffektiv. Daher wird vorgeschlagen, die flüssige Fraktion durch einen vorzugsweise polierten Konus aus dem Zyklon abzuziehen

Vorteilhaft ist es, wenn mindestens 50 % der Flüssigkeit im Bereich des Ausganges des Förderrohres zugegeben werden.

Dabei ist es vorteilhaft, wenn im Verflüssiger der Druck des Fördergutes gemessen wird. Der Druck kann dabei an verschiedenen Stellen gemessen werden, um den Antrieb der drehbaren Wendel zu steuern. Dabei sollte etwa eine gleichbleibende Füllhöhe des Mediums am Eingang des Verflüssigers vorliegen, die im Wesentlichen durch die Leistung des Antriebs der nachgeschalteten Pumpe und insbesondere der Kreiselpumpe bestimmt wird.

Ein vorteilhaftes Verfahren sieht vor, dass am Förderrohr Wasser unter Druck zugegeben wird und der im Verflüssiger gemessene Wert zur Steuerung eines Wasserzuflusses zum Fördergut verwendet wird.

Außerdem kann es vorteilhaft sein, wenn der im Verflüssiger gemessene Wert zur Steuerung eines Antriebs der drehbaren Wendel verwendet wird.

Kumulativ oder alternativ ist vorgesehen, dass der im Verflüssiger gemessene Wert zur Steuerung eines Antriebs einer der Förderstrecke nachgeschalteten Pumpe verwendet wird.

Eine optimale Regelung kann dadurch erreicht werden, dass beim Betrieb des Verflüssigers der Abstand zwischen der Schütthöhe und der Höhe der Flüssigkeit im Verflüssiger in einem vorgegebenen Bereich gehalten wird.

Dadurch wird es möglich, lange Förderstrecken, auf denen bisher mit Schnecken- oder Bandförderern gefördert wurde, durch Rohre zu ersetzen, in denen das zu fördernde Material gepumpt wird.

Beispielsweise im Bereich der Papierindustrie und der Rückgewinnung von Faserstoffen aus Reststoffen führt eine zwischenzeitige Verflüssigung des zu fördernden Materials zu einer Erhöhung der Zuverlässigkeit der Fördereinrichtung, da insbesondere Schneckenförderer und Wendeln ausfall- und verschleißanfällig sind.

Insbesondere bei der Verwendung von Kompakter und Verflüssiger kann das im Kompakter anfallende Wasser gleichzeitig oder zeitversetzt einem Verflüssiger zugegeben werden. Dadurch wird eine effektive Förderstrecke ermöglicht, über die besonders dickflüssiges Material durch eine zwischenzeitige Verflüssigung gepumpt werden kann, um Höhen zu überwinden, um im Bogen zu fördern und effektiv und wenig störanfällig größere Volumina innerhalb einer Förderstrecke zu bewegen.

Ein Ausführungsbeispiel eines Verflüssigers ist in der Figur gezeigt und wird im Folgenden näher erläutert.

Es zeigt
- Figur 1: einen Schnitt durch einen Verflüssiger,
- Figur 2: eine erste Anlage mit Aufbereiter, Verflüssiger und Hydrozyklon und
- Figur 3: eine zweite Anlage mit Aufbereiter, Verflüssiger und Hydrozyklon.

Der Verflüssiger 1 weist ein zylinderförmiges Förderrohr 2 auf, in dem als Dickstoffförderer eine drehbare Wendel 3 angeordnet ist. Das zylinderförmige Förderrohr 2 weist einen Eingang 4 und einen Ausgang 5 auf. Längs des Förderrohres 2 sind Wasserzuläufe 6, 7 vorgesehen, über die Wasser mit Druck in das zylinderförmige Förderrohr gepresst wird. Am Ausgang 5 des zylinderförmigen Förderrohrs 2 ist ein Trichter 8 angeordnet, der ebenfalls einen Wasserzulauf 9 aufweist. In diesem Trichter 8 ist die Wendel 3 einer Schnecke als sich im Querschnitt verjüngende Wendel 10 ausgebildet. Die Wendel 3 hat eine vom Eingang 4 zum Ausgang 5 leicht steigende Ganghöhe und im Bereich des zylinderförmigen Förderrohrs einen gleichbleibenden Wendeldurchmesser.

Am verjüngten Ende 11 des Trichters 8 ist eine Pumpe 12 angeordnet. Diese Pumpe ist eine Kreiselpumpe, die zentral am verjüngten Ende 11 des Trichters 8 angeflanscht ist und radial über den Ausgang 13 das verflüssigte Medium in ein Rohr (nicht gezeigt) fördert.

Am Eingang 4 des Förderrohrs 2 ist ein Zulauf 14 vorgesehen, der radial das Medium zur Wendel 3 führt. Der Zulauf 14 hat eine Öffnung 15, die beispielsweise mit dem Ausgang eines Pulpers in Verbindung steht, von dem das Medium zum Verflüssiger 1 geleitet wird.

Der Abstand zwischen der Wendel 3 und dem Förderrohr 2 wird am Eingang 4 des zylinderförmigen Förderrohres dadurch vergrößert, dass am Übergang vom Zulauf 14 zum Förderrohr 2 eine Aufweitung 16 vorgesehen ist. Außerdem weist der Zulauf 14 am Übergang zum Förderrohr 2 eine Einschnürung 17 auf.

Am Boden des Förderrohres 2 ist eine Messeinrichtung 18 zur Ermittlung des hydrostatischen Drucks vorgesehen, die entsprechend der Höhe des Wasserspiegels im Förderrohr 2 oder im Zulauf 14 einen Messwert liefert, der zur Steuerung des Antriebs 19 der Wendel 3 oder des Antriebs 20 der Pumpe 12 dient. Die Höhe des zugeführten Mediums wird dabei mit der als Schütthöhenmesseinrichtung 21 dienenden Radarmessung ermittelt.

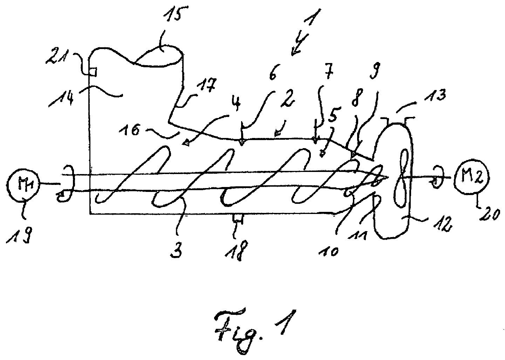

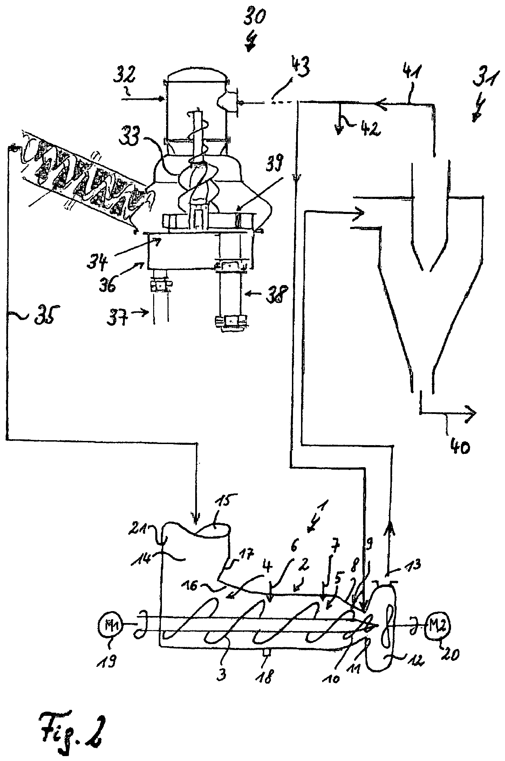

Die Figur 2 zeigt das Zusammenwirken des in Figur 1 gezeigten Verflüssigers 1 mit einem vorgeschalteten Aufbereiter 30 und einem nachgeschalteten Hydrozyklon 31.

Das zu behandelnde Rohmaterial wird mit Wasser im Bereich des Pfeils 32 dem Aufbereiter 30 zugegeben und dort mit der Schraube 33 umgewälzt, um oberhalb des Siebes 34 grobe Stoffe 35 abzutrennen. Nach einem Stoffsammler 36 ist ein Ausgang 37 für Freifaserstoff und gelöste Stoffe vorgesehen, die durch das Sieb gelangen.

Auf dem Sieb verbleibende Schwerteile werden über einen Schwerteilefang 38 aus dem Aufbereiter 30 entnommen. Unterhalb der Schraube 33 werden die Stoffe durch eine Verdrängerspirale 39 über das Sieb 34 bewegt. Die Funktion des Aufbereiters und alternativer für diesen Zweck einsetzbarer Aufbereiter werden in der WO 2013/135224 beschrieben.

Stoffe, die keine Schwerteile sind und durch das Sieb nicht abgetrennt werden, gelangen in den Verflüssiger 1 und werden dort mit Wasser verdünnt. Das verdünnte Material wird anschließend über die Kreiselpumpe 12 und dicke Rohrleitungen mit schwach gekrümmten Bögen dem Hydrozyklon 31 zugegeben. Die Dicke der Rohrleitungen und die schwach gekrümmten Bögen sollen für einen geringen Widerstand in der Leitung zwischen Kreiselpumpe 12 und Hydrozyklon 31 sorgen. Im Hydrozyklon 31 werden absinkende von aufschwimmenden Materialien getrennt. Die absinkenden Materialien werden beim Pfeil 40 entnommen und die aufschwimmendenden Materialien werden beim Pfeil 41 mit dem Wasser dem Hydrozyklon entnommen und im Wesentlichen wieder dem Verflüssiger 1 zugeführt. Davor kann ein Teilstrom 42 abgetrennt werden, um Feststoffe zu entfernen und es kann ein Teilstrom 43 zum Aufbereiter 30 zurückgeführt werden. Zur Trennung kann im Verflüssiger und im Hydrozyklon auch eine Flüssigkeit mit einer von der von Wasser abweichenden Dichte wie beispielsweise ein Alkohol oder ein Öl verwendet werden.

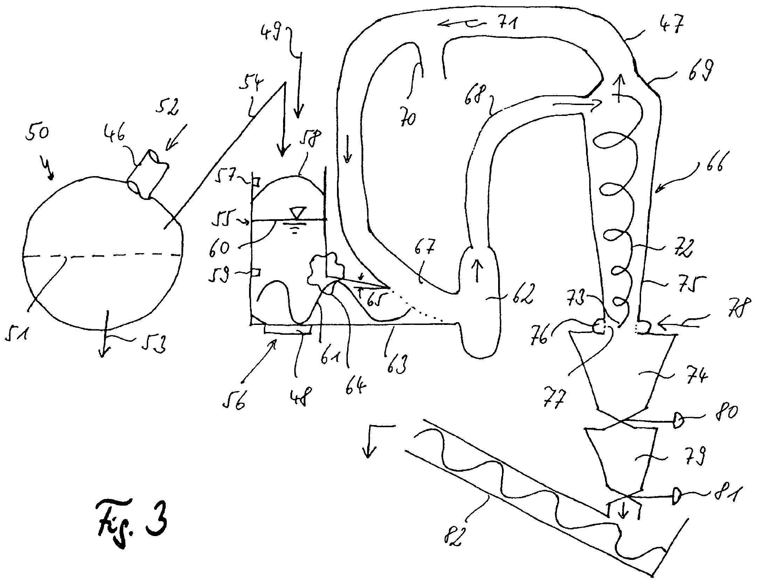

Eine weitere Ausführungsform einer erfindungsgemäßen Anlage zeigt die Figur 3. Der dort gezeigte Entstoffer 50 trennt mit einem Sieb 51 das zugegebene Material 52 in das Sieb passierendes Material 53 und einen Materialstrom 54, der oberhalb des Siebes 51 aus dem Entstoffer 50 entnommen wird. Der Entstoffer wird bei einer Materialdichte von etwa 20 % GG betrieben und anschließend wird das Material 54 in einem Schwerkraftpuffer 55 des Verflüssigers 56 gegeben.

Im Schwerkraftpuffer 55 wird das Material aus dem Entstoffer 50 und neues Material 49 gesammelt, mit einem Radar 57 wird die Materialschütthöhe 58 gemessen und mit einem Druckgeber 59 wird die Flüssigkeitshöhe 60 ermittelt. Materialschütthöhe und Flüssigkeitshöhe dienen zur Regelung der Schnecke 61 und der Kreiselpumpe 62.

An der Unterseite des Schwerkraftpuffers 55 ist ein Schwerstteilefang 48 unter der Schnecke 61. Dieser Schwerstteilefang kann als Schublade ausgebildet sein. Es reicht aber auch eine einfache Absenkung im Bodenbereich, in der sich extrem schwere Teile wie Stahlkugeln, sehr große Steine, Brecherzähne etc. sammeln. Sie können von dort entnommen werden, damit sie die Anlage nicht beschädigen.

Relevant ist die Übergangsgeometrie am Einzug des konischen Förderrohrs 63 im Bereich 64. Wie zuvor beschrieben muss der Übergabewinkel 65 um starke Kompression zu vermeiden nicht zu groß gewählt sein. Damit sich Inhomogenitäten wie insbesondere Holzstücke zwischen Schnecke und Kante nicht einklemmen, sollte der Winkel auch nicht zu klein sein. Die Wendel der Schnecke 61 passt sich mit der zunehmenden Steigung an den zunehmend engen Querschnitt an.

Das Rohr des Verflüssigers 56 ist leicht konisch und hat einen Durchmesser zwischen 0,6 und 1,0 m, während der Eingangsquerschnitt der Kreiselpumpe zwischen 0,3 und 0,5 m liegt. Am Übergang zwischen Verflüssiger 56 und Kreiselpumpe 62 mündet der Zustrom vom Hydrozyklon 66 im Bereich 67. Dieser Zufluss vermeidet ein Verstopfen des konischen Rohres des Verflüssigers 56 am Übergang zur Kreiselpumpe 62.

In weiten Bögen 68 erfolgt die Zuführung des verflüssigten Stoffstroms von der Kreiselpumpe 62 zum Hydrozyklon 66. Der Hydrozyklon 66 hat einen innen polierten, kegelförmigen Kopf 69, der das Aufschwimmen von Folien und Olefinen ohne Verstopfungsgefahr ermöglicht. Derartige Grobstoffe gelangen vom kegelförmigen Kopf 69 in eine Leitung 47 mit einem Durchmesser von 400 mm und können beispielsweise am Ausgang 70 aus dem System entnommen werden. Der kegelförmige Kopf 69 verhindert, insbesondere wenn er poliert ist, ein Verstopfen des Zuganges zur Leitung 47durch aufschwimmendes Material, das sich sonst dort verhaken kann und dann den Ausgang zur Leitung 47 blockiert.

Die Rückführung des Oberlaufs des Hydrozyklons 66 zur Kreiselpumpe 62 erfolgt ebenfalls über weite Bögen mit großem Innendurchmesser, beispielsweise 0,4 m, derart vor den Pumpeneingang, dass die hierfür notwendige Impulsänderung im Augenblick der Unterbrechung der Strömungslinie am Punkt des Materialzuflusses minimal wird. Dies bringt weniger Energieverlust mit sich. Die Kreiselpumpe wird somit zur Turbine und die Verstopfungsneigung wird deutlich verringert.

Am Ausgang 70 wird eine Abzweigung in etwa von 90 ° zur geraden Strömungsrichtung 71 vorgesehen, sodass der Hauptimpuls des Stoffstroms entsprechend dem Pfeil 71 in Richtung zur Kreiselpumpe erfolgt und durch den 90 ° abgewinkelten Ausgang 70 durch die Impulsumlenkung ein gewisser Druckanstieg wie in einer Saugleitung bewirkt wird. Der Ausgang 71 ist vorzugsweise ohne Verschlussorgan derart ausgebildet, dass ein Teilstrom dort entnommen werden kann und dem Entstoffer 50 zugegeben werden kann. Somit entsteht ein Kreislauf, indem der Ausgang 70 mit dem Zugang 46 verbunden wird. In diesem Fall ist es vorteilhaft, wenn der Materialstrom 54vor seiner Zuführung zum Schwerkraftpuffer 55 so aufgeteilt wird, dass die Olefine, Folien etc. abgetrennt werden und nicht in den Schwerkraftpuffer 55 gelangen.

Der Zyklon 66 ist schlank und hoch gebaut, um einen langen Wirbelstrom 72 zu bewirken. Der untere Umlenkpunkt 73 sollte vor der Beruhigungskammer 74 liegen und nicht in der Beruhigungskammer. Zwischen konischem Bereich 75 des Hydrozyklons 66 und dessen Beruhigungskammer 74 ist eine Wasserringkammer 76 vorgesehen, die ein Lochblech 77 aufweist, um durch das Lochblech fein dosiert genau diejenige Wassermenge zuzuführen, die zur fraktionierenden Strömungstrennung notwendig ist. Die Wasserzuführung wird durch den Pfeil 78 angedeutet.

Der Beruhigungsbehälter 74 wird kontinuierlich betrieben und ein sich anschließender Schwerteilefang 79 wird periodisch betrieben. Hierzu sind die Schieber 80 und 81 vorgesehen. Der Abtransport des im Hydrozyklon als Unterlauf entfernten Materials erfolgt über einen Tragförderer 82.

Die gezeigten Anlagen eignen sich besonders zum Recycling von faserhaltigen Materialien, wie beispielsweise von Getränkekartonkunststoff.

## Patentansprüche

1. Verflüssiger (1) mit einem Förderrohr (2), das einen Eingang (4) und einen Ausgang (5) aufweist und in dem ein Dickstoffförderer (3) angeordnet ist, ***dadurch gekennzeichnet, dass*** am Ausgang (5) des Förderrohres (2) eine Kreiselpumpe (12) angeordnet ist.

2. Verflüssiger nach Anspruch 1, ***dadurch gekennzeichnet, dass*** am Ausgang des Förderrohres und vor der Kreiselpumpe ein Hauptflüssigkeitszulauf (9) angeordnet ist.

3. Verflüssiger nach Anspruch 2, ***dadurch gekennzeichnet, dass*** der Hauptflüssigkeitszulauf eine Richtungskomponente in Richtung der Achse des Förderrohres (2) hat.

4. Verflüssiger nach Anspruch 2 oder 3, ***dadurch gekennzeichnet, dass*** der Hauptflüssigkeitszulauf eine Richtungskomponente in Richtung einer Umfangslinie des Förderrohres (2) hat.

5. Verflüssiger nach einem der vorhergehenden Ansprüche, ***dadurch gekennzeichnet, dass*** am Ausgang (5) des Förderrohres (2) ein Trichter (8) angeordnet ist.

6. Verflüssiger nach Anspruch 5, ***dadurch gekennzeichnet, dass*** im Bereich des Trichters (8) ein Ende des Dickstoffförderers (3) angeordnet ist, dessen Außendurchmesser sich dem Trichter (8) entsprechend verjüngt.

7. Verflüssiger nach Anspruch 5 oder 6, ***dadurch gekennzeichnet, dass*** direkt am verjüngten Ende (11) des Trichters (8) die Kreiselpumpe (12) angeordnet ist.

8. Verflüssiger nach einem der Ansprüche 5 bis 7, ***dadurch gekennzeichnet, dass*** der Dickstoffförderer (3), der Trichter (8) und die Kreiselpumpe (12) auf einer geraden Linie angeordnet sind.

9. Verflüssiger nach einem der vorhergehenden Ansprüche, ***dadurch gekennzeichnet, dass*** der Dickstoffförderer (3) eine Schnecke ist.

10. Verflüssiger nach einem der vorhergehenden Ansprüche, ***dadurch gekennzeichnet, dass*** die Gangweite des Dickstoffförderers (3) im Förderrohr (2) vom Eingang (4) zum Ausgang (5) zunimmt.

11. Verflüssiger nach einem der vorhergehenden Ansprüche, ***dadurch gekennzeichnet, dass*** am Eingang (4) des Förderrohres (2) ein Zulauf (14) senkrecht zur Förderrichtung des Dickstoffförderers (3) angeordnet ist.

12. Verflüssiger nach Anspruch 11, ***dadurch gekennzeichnet, dass*** das Förderrohr (2) am Übergang vom Zulauf (14) zum Förderrohr (2) eine Aufweitung (16) aufweist.

13. Verflüssiger nach Anspruch 11 oder 12, ***dadurch gekennzeichnet, dass*** der Zulauf (14) am Übergang zum Förderrohr (2) eine Einschnürung (17) aufweist.

14. Verflüssiger nach einem der Ansprüche 11 bis 13, ***dadurch gekennzeichnet, dass*** im Zulauf (14) eine Schütthöhenmesseinrichtung (21) angeordnet ist.

15. Verflüssiger nach einem der Ansprüche 11 bis 14, ***dadurch gekennzeichnet, dass*** im Zulauf (14) oder im Förderrohr (2) eine Messeinrichtung (18) zur Ermittlung des hydrostatischen Drucks angeordnet ist.

## Claims

1. A liquefier (1) with a transporting tube (2), which comprises an inlet (4) and an outlet (5) and in which a thick matter conveyor (3) is arranged, ***characterised in that*** a rotary pump (12) is arranged at the outlet (5) of the transporting tube (2).

2. The liquefier according to claim 1 ***characterised in that*** at a main liquid supply (9) is arranged at the outlet of the transporting tube and before the rotary pump.

3. The liquefier according to claim 2 ***characterised in that*** the main liquid supply comprises a directing component in the direction of the axis of the transporting tube (2).

4. The liquefier according to claim 2 or 3, ***characterised in that*** the main liquid supply comprises a directing component in the direction of a circumferential line of the transporting tube (2).

5. The liquefier according to any one of the preceding claims ***characterised in that*** a funnel (8) is arranged at the outlet (5) of the transporting tube (2).

6. The liquefier according to claim 5 ***characterised in that*** arranged in the area of the funnel (8) is one end of the thick material conveyor (3), the outer diameter of which narrows in keeping with the funnel (8).

7. The liquefier according to claim 5 or 6 ***characterised in that*** the rotary pump (12) arranged directly at the narrow end (11) of the funnel (8).

8. The liquefier according to any one of claims 5 to 7 ***characterised in that*** the thick matter conveyor (3), the funnel (8) and the rotary pump (12) are arranged on a straight line.

9. The liquefier according to any one of the preceding claims ***characterised in that*** the thick matter conveyor (3) is a worm conveyor.

10. The liquefier according to any one of the preceding claims ***characterised in that*** the channel width of the thick matter conveyor (3) in the transporting tube (2) increases from the inlet (4) towards the outlet (5).

11. The liquefier according to any one of the previous claims ***characterised in that*** at the inlet (4) of the transporting tube (2) a feed (14) is arranged at right angles to the conveying direction of the thick matter conveyor (3).

12. The liquefier according to claim 11, ***characterised in that*** at the transition from the feed (14) to the transporting tube (2) the transporting tube (2) has a widening (16).

13. The liquefier according to claim 11 or 12, ***characterised in that*** at the transition to the transporting tube (2) the feed (14) has a constriction (17).

14. The liquefier according to any one of claims 11 to 13, ***characterised in that*** a pouring height measuring device (21) is arranged in the feed (14).

15. The liquefier according to any one of claims 11 to 14 ***characterised in that* a** measuring device (18) for determining the hydrostatic pressure is arranged in the feed (14) or in the transporting tube (2).

## Revendications

1. Liquéfacteur (1) avec un tube de transport (2) qui comporte une entrée (4) et une sortie (5) et dans lequel est placé un transporteur (3) de substances épaisses, ***caractérisé en ce qu'*** à la sortie (5) du tube de transport (2) est placée une pompe centrifuge 12).

2. Liquéfacteur selon la revendication 1, ***caractérisé en ce qu**'* à la sortie du tube de transport et à l'avant de la pompe centrifuge est placée une alimentation principale (9) de liquide.

3. Liquéfacteur selon la revendication 2, ***caractérisé en ce que*** l'alimentation principale de liquide a une composante directionnelle dans la direction de l'axe du tube de transport (2).

4. Liquéfacteur selon la revendication 2 ou 3, ***caractérisé en ce que*** l'alimentation principale de liquide a une composante directionnelle dans la direction de la ligne périphérique du tube de transport (2).

5. Liquéfacteur selon l'une quelconque des revendications précédentes, ***caractérisé en ce qu***' à la sortie (5) du tube de transport (2) est placée une trémie (8).

6. Liquéfacteur selon la revendication 5, ***caractérisé en ce que*** dans la région de la trémie (8) est placée une extrémité du transporteur (3) de substances épaisses dont le diamètre extérieur se rétrécit en fonction de la trémie (8).

7. Liquéfacteur selon la revendication 5 ou 6, ***caractérisé en ce que*** la pompe centrifuge (12) est placée directement sur l'extrémité (11) rétrécie de la trémie (8).

8. Liquéfacteur selon l'une quelconque des revendications 5 à 7, ***caractérisé en ce que*** le transporteur (3) de substances épaisses, la trémie (8) et la pompe centrifuge (12) sont placés sur une ligne droite.

9. Liquéfacteur selon l'une quelconque des revendications précédentes, ***caractérisé en ce que*** le transporteur (3) de substances épaisses est une vis sans fin.

10. Liquéfacteur selon l'une quelconque des revendications précédentes, ***caractérisé en ce que*** la largeur de dégagement du transporteur (3) de substances épaisses dans le tube transporteur (2) augmente de l'entrée (4) à la sortie (5).

11. Liquéfacteur selon l'une quelconque des revendications précédentes, ***caractérisé en ce qu**'*à l'entrée (4) du tube de transport (2), une amenée (14) est placée à la perpendiculaire de la direction de transport du transporteur (3) de substances épaisses.

12. Liquéfacteur selon la revendication 11, ***caractérisé en ce qu***'au passage de l'amenée (14) vers le tube de transport (2), le tube de transport (2) comporte un élargissement (16).

13. Liquéfacteur selon la revendication 11 ou 12, ***caractérisé en ce qu***'au passage vers le tube de transport (2), l'amenée (14) comporte un étranglement (17).

14. Liquéfacteur selon l'une quelconque des revendications 11 à 13, ***caractérisé en ce que*** dans l'amenée (14) est placé un système de mesure (21) de la hauteur de déversement.

15. Liquéfacteur selon l'une quelconque des revendications 11 à 14, ***caractérisé en ce que*** dans l'amenée (14) ou dans le tube de transport (2) est placé un système de mesure (18) pour déterminer la pression hydrostatique.
